# FASCICULE DE BREVET EUROPEEN

(11) **EP 4 638 194 B1**
(45) Date de publication et mention de la délivrance du brevet: **04.11.2026**
(21) Numéro de dépôt: 23834201.8
(22) Date de dépôt: 20.12.2023
(51) Int. Cl.: B60Q 1/00, F21S 41/147, F21S 41/26, F21S 41/265, F21S 41/32

(54) **DISPOSITIF LUMINEUX COMPRENANT UNE PLURALITÉ DE MODULES**
LEUCHTVORRICHTUNG MIT MEHREREN MODULEN
LIGHT DEVICE COMPRISING A PLURALITY OF MODULES

(30) Priorité: 21.12.2022 FR 2214077
(43) Date de publication de la demande: 29.10.2025
(73) Titulaire: Valeo Vision, 93012 Bobigny Cedex (FR)
(72) Inventeur: GIRAUD, Sylvain, 93012 BOBIGNY CEDEX (FR); MARTIN, Nicolas, 93012 BOBIGNY CEDEX (FR)
(74) Mandataire: Valeo Visibility
(86) Numéro de dépôt international: PCT/EP2023/086862
(87) Numéro de publication internationale: WO 2024/133404

(56) Documents cités:
- EP-A1- 2 792 584
- WO-A1-2020/025171
- FR-A1- 3 118 120
- FR-A1- 3 119 440
- JP-A- 2020 205 206

## Description

### DOMAINE TECHNIQUE

La présente invention concerne le domaine de l'éclairage, ce qui inclut la signalisation ainsi que les organes, notamment optiques, qui y participent. Elle trouve pour application le domaine des véhicules automobiles. Notamment, elle est relative à un dispositif lumineux incorporant une pluralité de modules dont les sources lumineuses sont dans un même plan de support.

Une destination potentielle est la formation d'un faisceau du type feu de croisement apte à équiper l'avant d'un véhicule automobile. Cette formation peut être combinée avec la production d'autres faisceaux, notamment un faisceau de complément route.

### ETAT DE LA TECHNIQUE

Dans le secteur de l'automobile, on connaît des dispositifs susceptibles d'émettre des faisceaux lumineux, réalisant ou participant à réaliser des fonctions d'éclairage et/ou de signalisation.

Ces dispositifs doivent répondre aux réglementations en vigueur en émettant la lumière aux endroits souhaités tout en limitant la luminosité dans certaines zones.

Ces dispositifs d'éclairage ou projecteurs permettent de réaliser des faisceaux lumineux. Un exemple de faisceau lumineux peut être un faisceau d'éclairage à coupure, tel qu'un faisceau de feu de croisement, ou codes, de portée sur la route avoisinant les 70 mètres, qui est utilisé essentiellement la nuit et dont la répartition lumineuse est telle qu'elle permet de ne pas éblouir le conducteur d'un véhicule croisé. Typiquement, ce faisceau présente une coupure en partie supérieure avec une portion horizontale, préférentiellement environ 0,57 degrés en dessous de l'horizon, afin de ne pas éclairer la zone dans laquelle devrait se trouver le conducteur d'un véhicule arrivant en sens inverse et une portion coudée aussi appelée « kink » en anglais. Le dispositif d'éclairage peut également réaliser un faisceau lumineux de feu de route, ou encore un faisceau lumineux de complément de route, qui permet de réaliser avec le faisceau lumineux de feu de croisement un faisceau lumineux de feu de route.

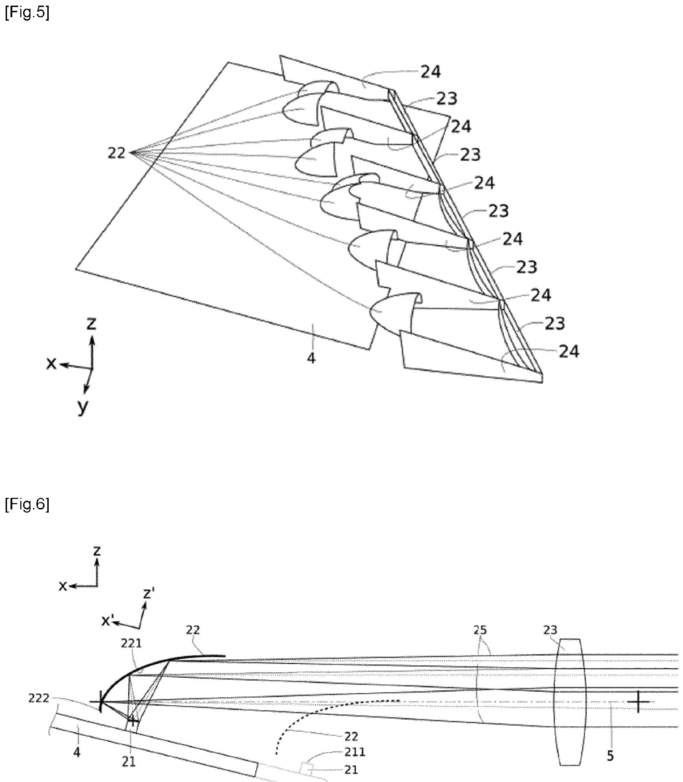

Il est connu de réaliser ces faisceaux lumineux, en utilisant plusieurs modules lumineux. Un tel de ces modules lumineux comprend, classiquement, un collecteur avec une surface réfléchissante de révolution avec un profil en forme de calotte dans un demi-espace délimité par un plan horizontal. Une source lumineuse essentiellement ponctuelle, du type diode à électroluminescence, est située à un premier foyer de la surface réfléchissante et éclaire dans le demi-espace en direction de ladite surface. Les rayons sont ainsi réfléchis de manière convergente vers une lentille de projection. Dans ce contexte, la publication brevet FR3118120 A1 présente un dispositif lumineux comportant une pluralité de modules lumineux qui sont portés par une platine, en procurant un effet de style (qui peut être imposé par la forme de la carrosserie du véhicule à l'endroit du projecteur de phare dans lequel le dispositif lumineux est implanté) dans lequel, lorsque le véhicule est observé depuis sa partie avant, les faisceaux émis par les différents modules depuis leurs lentilles de projection forment un profil incliné depuis une première extrémité formant un point bas et avancé (vers l'avant du véhicule) du profil jusqu'à une deuxième extrémité formant un point haut et reculé (vers l'arrière du véhicule) du profil. Pour y parvenir, les différents modules sont portés par une platine commune et les modules sont juxtaposés suivants un profil pour étendre le dispositif d'avant en arrière du véhicule automobile. En outre, pour que le profil s'étende d'un point bas à un point haut, la platine est montée de manière inclinée de sorte à former un angle non nul relativement à une droite horizontale parallèle à l'axe optique. Cette disposition conduit à incliner tous les modules relativement à l'axe optique de projection souhaité (typiquement horizontal et dirigé vers l'avant du véhicule) et implique une forte complexité d'implantation des éléments participant à la projection ; en particulier, dans le mode de réalisation visible à la figure 5 de cette antériorité, l'inclinaison de la platine, des sources lumineuses et des collecteurs nécessitent la mise en œuvre de lentilles de projection prismatiques, engendrant des pertes et des aberrations chromatiques. Par ailleurs, cette technologie atteint rapidement des limites dans la conception du prisme de la lentille, si l'on souhaite des inclinaisons importantes du profil formé par les modules.

Un objet de la présente invention est donc de proposer un dispositif permettant de s'affranchir au moins en partie des inconvénients cités.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation, on prévoit un dispositif lumineux configuré pour projeter un faisceau lumineux de sortie selon un axe optique de projection.

Il est destiné à être dirigé horizontalement de l'arrière vers l'avant du véhicule dans une position fonctionnelle du dispositif dans le véhicule dans laquelle le dispositif équipe un côté d'une face avant du véhicule pour une projection vers l'avant du véhicule.

Ce dispositif comporte :
- une pluralité de modules lumineux juxtaposés comportant chacun au moins une source de lumière, un collecteur doté d'une surface réfléchissante et une lentille de projection, la surface réfléchissante étant configurée pour réfléchir vers la lentille de projection des rayons lumineux issus de la source de lumière ;
- un support sur lequel sont disposées toutes les sources de lumière dans un plan de support, le plan de support formant un angle γ par rapport à un plan horizontal, autour d'un axe d'inclinaison Y horizontal et perpendiculaire à l'axe optique de projection, et formant un angle φ par rapport à un plan horizontal, autour de l'axe optique de projection.

Ce dispositif est par ailleurs tel que :
- la lentille de projection de chaque module lumineux présente un axe optique de lentille parallèle à l'axe optique de projection, et
- la surface réfléchissante de chaque collecteur est configurée pour que les rayons lumineux réfléchis soient sous forme d'un faisceau orienté suivant une direction principale de réflexion confondue avec l'axe optique de lentille, et
- les sources de lumière sont disposées sur le support avec un premier décalage suivant l'axe optique de projection, et avec un deuxième décalage suivant une direction verticale Z, lorsque le dispositif est en position fonctionnelle,
- au moins un des angles γ et φ est non nul, l'angle γ étant compris dans un premier secteur angulaire qui permet que la direction principale d'émission des sources de lumière soit dirigée vers l'avant du véhicule dans la position fonctionnelle, et l'angle φ étant dirigé dans un deuxième secteur angulaire qui permet que la direction principale d'émission des sources de lumière soit dirigée vers l'intérieur du véhicule dans la position fonctionnelle.

Ainsi, on peut disposer toutes les sources du dispositif sur un seul support, typiquement une platine unique pouvant être sous forme d'une carte à circuits imprimés (ce qui n'exclut pas que le dispositif soit intégré dans un système plus complexe comprenant d'autres modules de lumières sur d'autres supports, notamment pour produire des faisceaux lumineux réalisant d'autres fonctions d'éclairage pour véhicule). Tout en ayant un seul support, on parvient ici à diriger la lumière réfléchie par le collecteur suivant l'axe optique de la lentille de projection. Ce qui facilite la phase de projection de faisceau.

De préférence, la lentille présente une symétrie autour de l'axe optique de lentille.

Pour diriger la lumière du réflecteur selon l'axe optique de la lentille, l'invention combat un préjugé selon lequel le collecteur et sa source de lumière forment un ensemble invariable, c'est-à-dire que leur position relative est fixe et obligatoirement telle que l'inclinaison du collecteur suit celle de la source (qui est déterminée par l'inclinaison du support). Au contraire, le collecteur est ici avantageusement positionné de manière indépendante de la position du support, ce qui permet de diriger sa direction principale de réflexion selon l'axe optique de la lentille de projection. Ceci permet ainsi d'éviter d'utiliser une lentille prismatique comme lentille de projection.

Un autre aspect concerne un véhicule équipé de deux dispositifs lumineux, les deux dispositifs étant chacun situé d'un côté du véhicule et de sorte à projeter un faisceau lumineux vers l'avant du véhicule.

Les deux dispositifs sont de préférence symétriques relativement à un plan verticale médian du véhicule parallèle à l'axe optique.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
[Fig.1A] La figure 1A est une représentation partielle de la partie avant d'un véhicule automobile, schématisant un paramètre α d'inclinaison souhaitée pour le profil du dispositif lumineux.
[Fig.1B] La figure 1B est une représentation partielle de la partie avant d'un véhicule automobile, schématisant un paramètre β d'inclinaison souhaitée pour le profil du dispositif lumineux.
[Fig.2] La figure 2 représente une vue de dessus de la répartition de différents modules pour former un dispositif lumineux, dans un premier mode de réalisation.
[Fig.3] La figure 3 représente une vue de face du dispositif lumineux correspondant au premier mode de réalisation.
[Fig.4] La figure 4 représente une vue de profil du dispositif lumineux correspondant au premier mode de réalisation.
[[Fig.5] La figure 5 représente une vue en perspective du dispositif lumineux correspondant au premier mode de réalisation.
[[Fig.6] La figure 6 représente des éléments d'un module lumineux participant à former une partie du faisceau, ainsi que le trajet de rayon lumineux, dans le premier mode de réalisation.
[Fig.7] La figure 7 représente un abaque donnant un exemple de détermination d'un angle d'inclinaison du plan de support selon les paramètres d'inclinaison frontale α et d'inclinaison de dessus β.
[Fig.8] La figure 8 représente un exemple de forme d'un faisceau du type feu de croisement, avec différentes lignes isocandela, pouvant être obtenue.
[Fig.9] La figure 9 montre, en vue de face, un dispositif lumineux selon un deuxième mode de réalisation.
[Fig.10] La figure 10 montre, en vue de face, un dispositif lumineux selon un troisième mode de réalisation.
[Fig. 11] La figure 11 schématise l'inclinaison d'un plan de support dans le deuxième mode de réalisation, relativement au véhicule.
[Fig.12] La figure 12 schématise l'inclinaison d'un plan de support dans le premier mode de réalisation, relativement au véhicule.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.
- le premier secteur angulaire est compris entre 0° et 12° ;
- le deuxième secteur angulaire est compris entre 0° et 6°, et de préférence entre 0° et 3° ;
- pour chaque module lumineux 2, la lentille de projection 23 présente une symétrie autour de l'axe optique de lentille ;
- les sources de lumière 21 sont disposées sur le support tel que le premier décalage progresse de manière monotone suivant l'axe optique de projection 5, et tel que le deuxième décalage progresse de manière monotone suivant la direction verticale Z, lorsque le dispositif est en position fonctionnelle ;
- les sources de lumière 21 forment, dans le plan de support 4, un profil P qui se dirige vers l'arrière du véhicule 0 quand ledit profil P se dirige vers l'extérieur du véhicule 0, dans la position fonctionnelle ;
- le profil P forme une première projection selon la direction verticale Z, dans le plan formé par l'axe optique de projection 5 et l'axe d'inclinaison Y, première projection qui présente une première inclinaison β par rapport à l'axe d'inclinaison Y, et dans lequel la première inclinaison β est inférieure à 50°, et de préférence inférieure à 35° ;
- le profil P forme une deuxième projection selon l'axe optique de projection 5, dans le plan formé par la direction verticale Z et l'axe d'inclinaison Y, deuxième projection qui présente une deuxième inclinaison α par rapport à l'axe d'inclinaison Y, et dans lequel la deuxième inclinaison α est inférieure à 10°, et de préférence inférieure à 5° ;
- pour chaque module lumineux 2, la surface réfléchissante 221 comporte un bord arrière 222 au voisinage duquel un foyer de la lentille de projection 23 est situé, de préférence à moins de 10 mm de distance.
   - le dispositif est configuré pour produire un faisceau lumineux de sortie de type feu de croisement.

Dans les caractéristiques exposées ci-après, les termes relatifs à la verticalité, à l'horizontalité ou à la transversalité (ou encore direction latérale), ou leurs équivalents, s'entendent par rapport à la position dans laquelle le module est destiné à être monté dans un véhicule. Les termes « vertical » et « horizontal » sont utilisés dans la présente description pour désigner des directions, suivant une orientation perpendiculaire au plan de l'horizon pour le terme « vertical » (qui correspond à la hauteur des systèmes), et suivant une orientation parallèle au plan de l'horizon pour le terme « horizontal ». Elles sont à considérer dans les conditions de fonctionnement du dispositif dans un véhicule. L'emploi de ces mots ne signifie pas que de légères variations autour des directions verticale et horizontale soient exclues de l'invention. Par exemple, une inclinaison relativement à ces directions de l'ordre de + ou - 10° est ici considérée comme une variation mineure autour des deux directions privilégiées. Par rapport au plan horizontal, l'inclinaison est en principe comprise entre -5° et +4° et elle est comprise entre -6° et +7.5° latéralement. On considère que deux directions sont confondues ou parallèles si elles ne présentent pas un décalage angulaire notable du point de vue du fonctionnement ou selon les tolérances de fabrication ; et en particulier un décalage angulaire inférieur ou égal à 5° peut convenir. Par ailleurs, les adjectifs « inférieur » et « supérieur » sont à prendre en relation avec la direction verticale ; dans un même contexte, un élément supérieur sera situé au-dessus (mais pas forcément au contact, ni directement au droit) d'un élément inférieur, suivant la direction verticale.

Dans les illustrations, un repère orthogonal XYZ est utilisé comme référence. L'axe X est horizontal et orienté de l'avant vers l'arrière du véhicule ; l'axe Y est la transversale horizontale à l'axe X, l'axe Z est vertical.

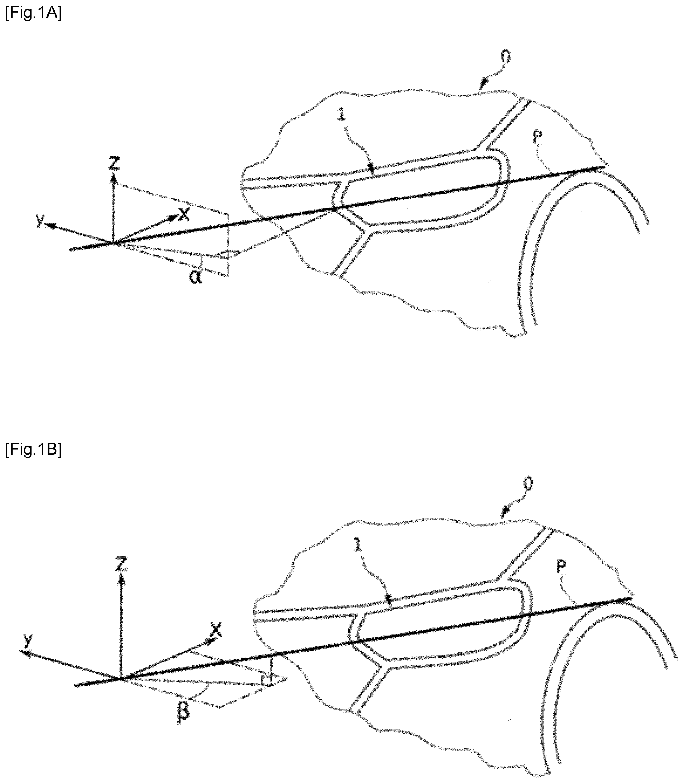

La figure 1A et la figure 1B montrent en perspective une portion avant de véhicule 0, pourvue d'un bloc optique 1 apte à recevoir un dispositif d'éclairage conforme à l'invention.

L'axe X correspond à la direction longitudinale du véhicule, l'axe Y à la largeur du véhicule, en l'occurrence horizontale et perpendiculaire à la direction longitudinale, et l'axe Z à une direction verticale, suivant la hauteur du véhicule. Typiquement, l'axe optique de projection 5 du faisceau résultant de la projection des modules est dirigé suivant l'axe X, et orienté dans le sens inverse, c'est-à-dire d'arrière en avant du véhicule.

Comme cela est visible, le dispositif d'éclairage est disposé à l'avant du véhicule 0, au côté gauche (en se mettant dans le sens de marche avant du véhicule), étant entendu qu'un dispositif d'éclairage symétrique est disposé au côté droit du véhicule. Un profil P de disposition des modules du dispositif d'éclairage est représenté ; il est de préférence rectiligne ; en figure 1A, on peut observer que ce profil P forme une deuxième projection selon l'axe optique de projection 5, dans le plan formé par la direction verticale Z et l'axe d'inclinaison Y, deuxième projection qui présente une deuxième inclinaison α par rapport à l'axe d'inclinaison Y, et dans lequel la deuxième inclinaison α est inférieure à 10°, et de préférence inférieure à 5°. L'arrangement des modules lumineux 2présente ainsi une inclinaison α en vue de face, cette inclinaison étant en l'occurrence vers le haut lorsqu'on se déplace le long du dispositif d'éclairage en direction du flanc latéral correspondant du véhicule 0.

Similairement, comme visible en figure 1B, le profil P forme une première projection selon la direction verticale Z, dans le plan formé par l'axe optique de projection 5 et l'axe d'inclinaison Y, première projection qui présente une première inclinaison β par rapport à l'axe d'inclinaison Y, et dans lequel la première inclinaison β est inférieure à 50°, et de préférence inférieure à 35°. Le dispositif d'éclairage présente ainsi une inclinaison β en vue de haut, cette inclinaison étant en l'occurrence dirigée vers l'arrière du véhicule lorsqu'on se déplace le long du dispositif d'éclairage en direction du flanc latéral correspondant du véhicule 0.

La ou les inclinaisons suivant l'angle α et/ou l'angle β, peuvent être essentiellement dictées par la forme de la carrosserie du véhicule, imposent une disposition particulière des modules d'éclairages qui va être décrite ci-après. Le profil P peut ainsi ne pas être nécessairement parfaitement rectiligne ; il peut par exemple présenter une courbure, mais il est souhaitable que la variation des angles α et β soit monotone, c'est-à-dire que leurs dérivés ne changent pas de signe.

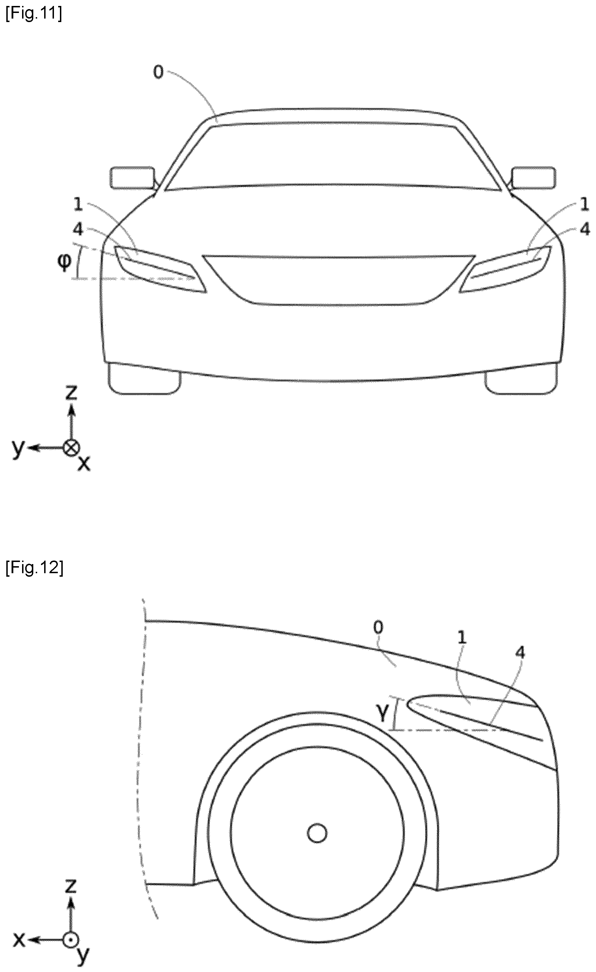

La figure 12 schématise la partie avant d'un véhicule 0 avec l'orientation générale d'un plan 4 correspondant à la surface du support qui porte les sources lumineuses des différents modules illustrés ci-après, dans un premier mode de réalisation. Dans ce cas de figure, on note que le plan 4 est incliné avec une normale sortant du véhicule avec un angle γ entre l'axe X et le plan de support 4.

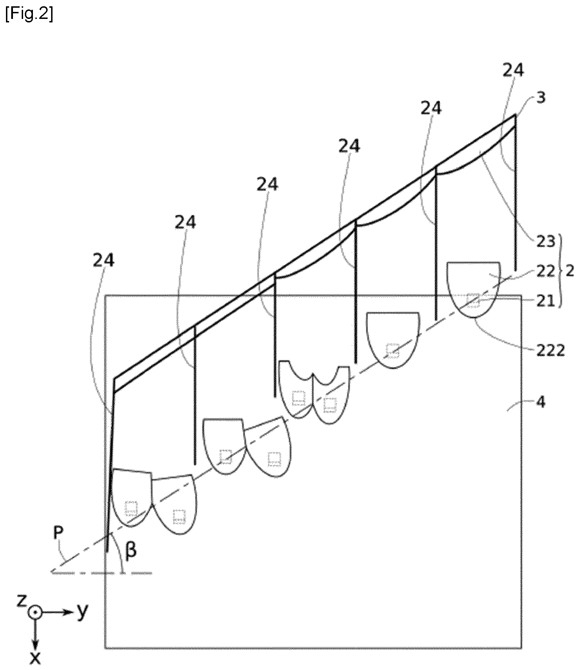

Les figures 2 à 8 fournissent des détails de réalisation du dispositif lumineux selon l'invention dans ce premier mode de réalisation.

Ainsi, la figure 2 procure une vue de dessus d'un dispositif comprenant la pluralité de modules 2. Chaque module 2 permet de former un faisceau de module et ces différents faisceaux peuvent être projetés de sorte à produire le faisceau de sortie du dispositif lumineux. Un ou plusieurs modules 2 peuvent être configurés pour produire un faisceau de base et étalé d'une forme de faisceau de sortie de feu de croisement ; un ou plusieurs autres modules 2 peuvent être configurés pour produire un faisceau à coupure avec un coude vers le centre pour compléter le faisceau de base dans un faisceau de sortie de feu de croisement. Par exemple, les modules 2 disposés par paires à la figure 2 peuvent servir à composer une portion aplatie à projeter sous l'horizon d'un feu de croisement, typiquement dénommé par le vocable «flat » en anglais ; en complément, au moins un des autres modules illustrés peut former une portion coudée, typiquement dénommé par le vocable « kink » en anglais, produisant la coupure de ce feu de croisement ; dans ce cas, le profil du bord arrière 222 du collecteur 22, détaillé ci-après, est adapté pour mettre en forme cette coupure.

Éventuellement, un ou plusieurs autres modules 2 peuvent être configurés pour former un faisceau complémentaire pour une fonction de feu de route, avec une projection sans coupure et comprenant une émission de lumière au-dessus de la ligne d'horizon.

Suivant une possibilité, les modules 2 sont activables sélectivement de sorte à réaliser un faisceau de sortie adaptatif.

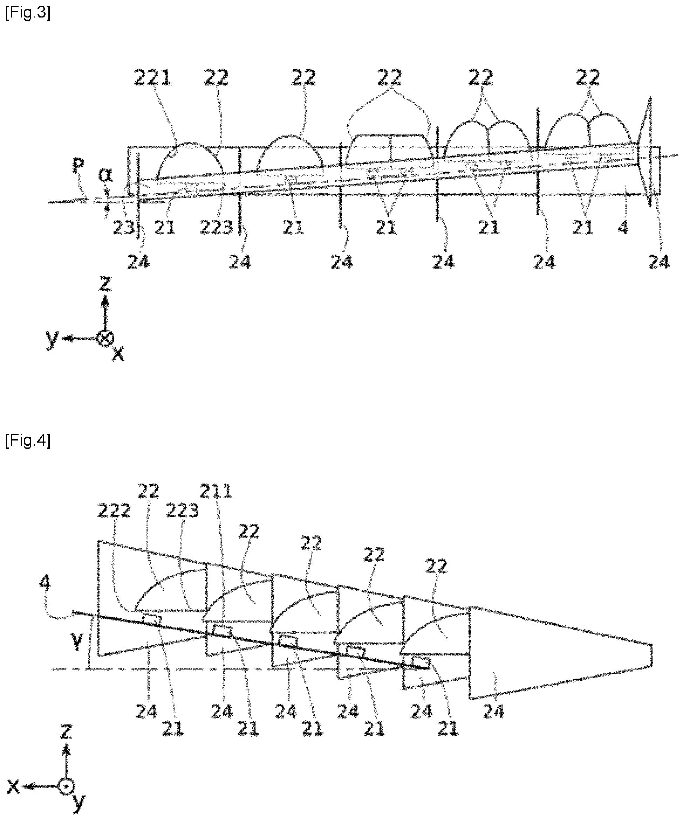

Chaque module lumineux 2 comporte au moins une source lumineuse 21. Cette dernière peut typiquement être une diode électroluminescente. Comme représenté notamment à la figure 4, les sources lumineuses 21 comportent de préférence une face d'émission 211 opposée à une face de base montée suivant un plan de support. Typiquement, toutes les sources lumineuses 21 sont portées par un support, tel qu'une platine qui peut s'implémenter avec une carte à circuits imprimés.

Les sources lumineuses 21 sont espacées le long du support en formant le profil P indiqué précédemment. La figure 2 fournit un exemple de juxtaposition de modules 2, avec un décalage progressif (il est de préférence monotone, c'est-à-dire que le décalage est toujours dans le même sens, et en particulier vers l'arrière du véhicule lorsque l'on va vers le côté du véhicule) de la position des sources lumineuses 21 dans le plan XY. Ce décalage progressif définit le profil P. Ce dernier est avantageusement rectiligne. Suivant une option, les sources lumineuses 21 sont parfaitement alignées le long du profil P. Cependant, pour des raisons de construction, il peut y avoir un certain décalage entre la position d'une source 21 et le profil P. dans ce cas, le profil P peut être une droite correspondant à la régression linéaire de l'emplacement des sources 21. Alternativement, ou en complément, le profil P peut être défini comme une droite médiane qui n'est pas située à une distance de plus de 3 mm de chacune des sources lumineuses 21.

Chaque module lumineux 2 comporte encore un collecteur 22. Ce dernier se présente avantageusement sous la forme d'une calotte dont la face concave présente une surface réfléchissante disposée en regard de la source. Le collecteur 22 comprend une tranche 223 dont la partie arrière, dirigée suivant la direction X vers l'arrière du véhicule, forme le bord arrière 222 du collecteur 22. La surface réfléchissante 221 adopte préférentiellement un profil parabolique suivant génératrice, avec un foyer situé au niveau de la source lumineuse 21 qui lui est associée. La focale de la surface réfléchissante 221 peut être de 3 mm. La distance entre le bord arrière 222 et le centre de la face de sortie de la lentille de projection 23 peut être de 65 mm.

On comprend que la lumière émise par une source 21 est adressée à la surface réfléchissante du collecteur 22 associée à la source 21 de sorte à produire des rayons réfléchis sous forme d'un faisceau. De préférence, ce faisceau réfléchi présente une direction correspondant à celle de la génératrice de la surface réfléchissante.

Chaque module 2 comporte en outre une lentille de projection 23. Les différentes lentilles 23 peuvent être portées par un support commun 3 comme le montre la figure 2. De préférence, les dioptres de sortie des lentilles 23 forment une surface continue. Les lentilles forment de préférence chacune un élément rectangulaire. D'autre part, il n'est pas indispensable que la partie active de la lentille 23 couvre l'intégralité de la surface de cet élément rectangulaire ; au contraire, la partie active peut être limitée à une fenêtre, de préférence rectangulaire, dont la disposition est ajustée pour former un axe de projection orienté suivant la direction principale de réflexion du collecteur correspondant . Certains modules 2 peuvent comprendre plusieurs collecteurs et de préférence, pour chaque collecteur, une source de lumière associée, , comme c'est le cas pour trois paires de modules à la figure 2. Elles peuvent d'ailleurs être réalisées d'un seul tenant, à partir d'une seule pièce de matière.

La lentille de projection 23 de chaque module 2 peut être fabriquée en un polymère optique ; il peut s'agir de polyméthacrylate de méthyle (PMMA) ou de polycarbonate. De préférence, les lentilles présentent une symétrie autour de l'axe optique, pour le moins selon un plan correspondant à la hauteur de la lentille.

Ensuite, la figure 2 illustre des séparateurs 24 s'étendant entre les collecteurs 22 et les lentilles 23, pour isoler optiquement au moins certains des modules.

La figure 3 fournit une autre illustration du premier mode de réalisation de l'invention, cette fois en vue de face. On note alors le décalage α angulaire entre le profil P et la direction de l'axe Y. De manière similaire à ce qui est produit en vue de dessus, on remarque ici également que les modules 2 sont juxtaposés de manière que leur décalage progresse de manière monotone suivant la direction verticale. En particulier, les modules 2 sont d'autant plus en hauteur qu'ils se situent vers le côté du véhicule 0.

De préférence, les lentilles 23 suivent l'inclinaison du profil P. Par contre, il n'est pas nécessaire que les collecteurs 22 adoptent cette inclinaison. Dans le premier mode de réalisation, de préférence, le plan de symétrie des collecteurs 22 est orienté suivant la normale à la face d'émission 211 de la source 21 correspondante.

La figure 4 présente une autre illustration du premier mode de réalisation de l'invention, suivant le plan XZ. On note que le plan de support 4 formes un angle γ avec l'horizontale. De cette façon, on peut faire progresser le profil P sur le plan de support 4 pour atteindre les angles α et β souhaités. La figure 4 révèle par ailleurs que la génératrice du profil du collecteur 22 garde une orientation horizontale, selon l'axe X, malgré l'inclinaison du support 4 selon l'angle γ. La tranche 223 du collecteur 22 est horizontale.

La figure 5 est une vue en perspective révélant la configuration résultante des modules lumineux du dispositif, avec les sources lumineuses portées sur un plan de support 4 lui-même incliné relativement à l'horizontale.

La figure 6 fournit un exemple de trajet de rayon lumineux issu d'une source 21 dans ce premier mode de réalisation, avec une coupe selon un plan orienté suivant XZ.

Plus particulièrement, différents trajets de rayon lumineux sont fournis, avec une réflexion sur le collecteur 22. Les rayons 25 issus du collecteur 22 sont dirigés vers la lentille de projection 23. De manière avantageuse, le collecteur 22 est configuré pour que la direction principale de réflexion corresponde à l'axe optique de la lentille 23, correspondant lui-même à l'axe optique de projection 5 représenté à la figure 6. Il en ressort que l'inclinaison de plan de support 4, et en conséquence des sources 21, n'est pas suivie par les collecteurs 22 dont la projection est globalement dirigée suivant l'axe optique des lentilles.

De cette façon, la sortie du collecteur 22 est un faisceau correctement dirigé par rapport à l'objectif de projection du faisceau de sortie. En particulier, cela permet d'utiliser une lentille non prismatique. Préférentiellement, comme montré à la figure 6, il peut s'agir d'une lentille 23 présentant pour le moins une symétrie selon un plan horizontal comprenant l'axe optique 5.

Pour optimiser ce résultat et obtenir une direction convenable de faisceau réfléchi par le collecteur 22, il est avantageux de faire en sorte que le premier foyer de la lentille 23 soit situé au voisinage du bord arrière 222 du collecteur 22. De préférence, la distance maximum séparant le foyer de la lentille 23 et la pointe arrière du collecteur 22 est de 10 mm.

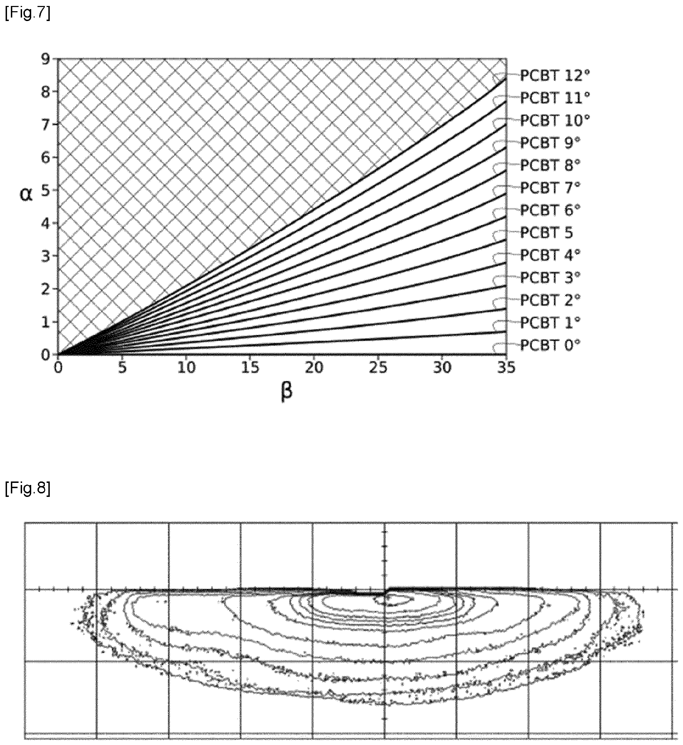

La figure 7 est un abaque montrant, pour le premier mode de réalisation, un exemple de détermination de l'angle d'inclinaison du plan de support 4 relativement à un plan horizontal dans une rotation selon l'axe Y, correspondant à l'angle γ représenté à la figure 4 et repéré par les courbes « PCBT » mettant en relation, pour une valeur d'angle γ, les angles β et α. Le recours à un tel abaque peut être opéré, mutatis mutandis, aux deux autres modes de réalisation décrits ci-après.

Les angles β et α sont non nuls. De préférence, l'angle β est choisi entre 0° (borne exclue) et 50° (borne incluse) ; plus préférentiellement, il est inférieur ou égal à 35°. De préférence, l'angle α est choisi entre 0° (borne exclue) et 10° (borne incluse) ; plus préférentiellement, il est inférieur ou égal à 5°.

D'une manière générale, pour le premier mode de réalisation et pour les autres modes de réalisation décrits ci-après, l'angle γ et de préférence compris entre 0° (borne exclue si l'angle φ discuté ci-après est nul, mais incluse si l'angle φ discuté ci-après est non nul) et 12° (borne incluse).

La figure 8 fournit un exemple de courbe isocandela représentative d'une projection produite par le dispositif lumineux ainsi proposé pour former un faisceau de sortie du type feu de croisement. On distingue nettement le caractère aplati du faisceau sur la ligne de coupure, avec une concentration d'intensité aux environs de l'axe optique.

Dans un deuxième mode de réalisation, l'inclinaison du plan de support 4 est effectuée de telle manière qu'il est tourné autour de l'axe X, de manière alternative à la rotation autour de l'axe Y du premier mode de réalisation.

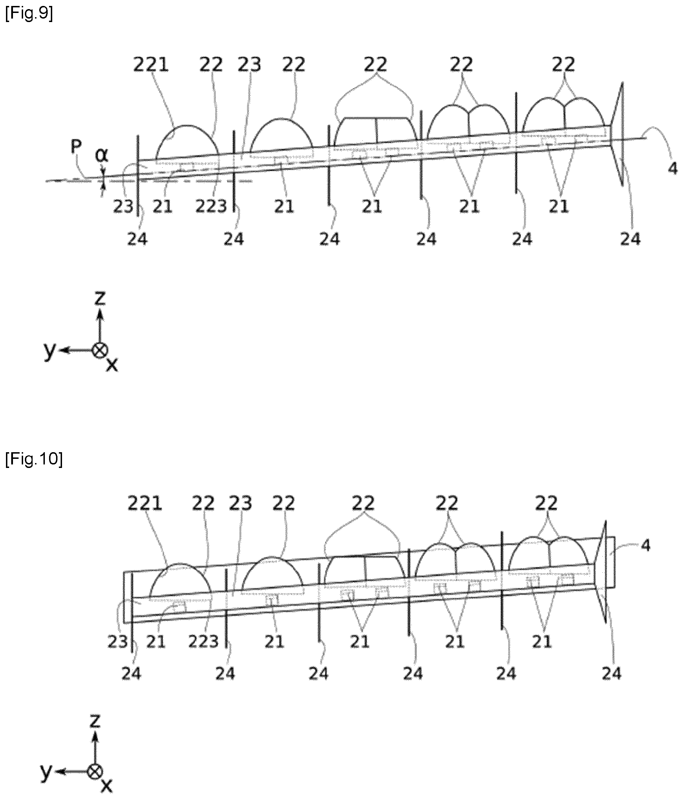

Un exemple de représentation de ce deuxième mode de réalisation est donné en vue de face par la figure 9. Comme précédemment, les modules 2, comprenant chacun au moins une source lumineuse 21, un collecteur 22 et une lentille de projection 23, sont disposés de manière juxtaposée suivant un profil P dans le plan 4. Les indications données précédemment pour les détails relatifs aux modules 22 et à leur disposition relative sont entièrement applicables à ce deuxième mode de réalisation. La différence réside dans l'orientation du plan 4. La figure 11 fournit une schématisation de cette différence, en comparaison au premier mode de réalisation représenté à la figure 12.

À la figure 11, le plan de support 4 est dirigé de manière à former l'angle φ par rapport à l'axe Y dans le plan vertical YZ. On notera que cet angle est configuré de sorte à ce que le plan 4 s'élève progressivement vers le côté du véhicule. Comme dans le mode de réalisation précédent, il est avantageux que les dispositions du plan 4, et plus préférentiellement du dispositif complet, soient identiques pour deux dispositifs lumineux placés chacun sur un côté différent de la face avant du véhicule 0, typiquement au niveau des blocs optiques 1 visibles à la figure 11 et à la figure 12.

Ainsi, dans le deuxième mode de réalisation comportant une inclinaison φ, les plans de support 4 des deux dispositifs lumineux équipant le véhicule 0 forment des parties de branches d'un «V » dont la jonction est située dans un plan médian du véhicule dirigé suivant le plan XZ.

En revenant à la figure 9, on peut noter que, comme précédemment, les sources lumineuses 21 sont portées par le plan 4 et disposent donc d'une face d'émission dont la normale est inclinée relativement à l'axe Z. Dans cette situation, l'inclinaison φ détermine directement l'angle α qui lui est égal. De préférence, les collecteurs 22 ne présentent pas cette inclinaison et restent dirigés de sorte à ce que leur génératrice soit parallèle à l'axe X ; de préférence, leurs tranches 223 restent situées dans un plan parallèle au plan XY. De cette manière, la projection du faisceau réfléchi par la surface réfléchissante du collecteur 22 s'effectue avec une répartition de lumière satisfaisante autour de l'axe optique 5 de la lentille de projection 23. Comme précédemment, il est avantageux que le bord arrière 222 de la surface réfléchissante 221 du collecteur 22 correspond sensiblement à l'un des foyers de la lentille de projection 23. Les paramètres de voisinage donnés précédemment en référence au premier mode de réalisation, sont applicables au deuxième mode de réalisation.

De préférence, l'angle φ est choisi entre 0° (borne exclue si l'angle γ est nul ; borne incluse si l'angle γ est non nul) et 6° (borne incluse) ; plus préférentiellement, il est choisi inférieur ou égal à 3°.

Comme suggéré au paragraphe précédent, il ressort que les inclinaisons γ et φ peuvent être combinées. La figure 10 révèle ce mode de réalisation avec un plan 4 doté de cette double inclinaison. Les positions relatives des éléments de chaque module 2 indiquées pour les deux précédents modes de réalisation sont appliquées en combinaison dans ce troisième mode de réalisation. Les indications précédemment fournies pour les configurations adaptées aux inclinaisons, respectivement φ et γ, peuvent donc être mises en œuvre en association dans ce troisième mode de réalisation.

A l'usage, dans tous les modes de réalisation, un ou plusieurs modules lumineux 2 peuvent être activés, de préférence de manière sélective, pour produire chacun un faisceau de module, la résultante de ces faisceaux de module réalisant un faisceau de sortie globale projetée vers l'avant du véhicule 0 suivant la direction de l'axe optique 5. Les inclinaisons de plan, et les adaptations de position relative entre les différents composants, notamment entre les sources lumineuses, les collecteurs et les lentilles, procurent, grâce à l'invention, une projection d'un faisceau homogène et optimisé, notamment en diminuant les aberrations, suivant la direction de l'axe optique.

L'invention n'est pas limitée aux modes de réalisation précédemment décrits.

## Revendications

1. Dispositif lumineux de véhicule automobile (0), configuré pour projeter un faisceau lumineux de sortie selon un axe optique de projection (5) destiné à être dirigé horizontalement de l'arrière vers l'avant du véhicule (0) dans une position fonctionnelle du dispositif dans le véhicule (0) dans laquelle le dispositif équipe un côté d'une face avant du véhicule (0) pour une projection vers l'avant du véhicule (0), comportant :
- une pluralité de modules lumineux (2) juxtaposés comportant chacun au moins une source de lumière (21), un collecteur (22) doté d'une surface réfléchissante (221) et une lentille de projection (23), la surface réfléchissante (221) étant configurée pour réfléchir vers la lentille de projection (23) des rayons lumineux issus de la source de lumière (21), et
- un support sur lequel sont disposées toutes les sources de lumière dans un plan de support (4), le plan de support (4) formant un angle γ par rapport à un plan horizontal, autour d'un axe d'inclinaison Y horizontal et perpendiculaire à l'axe optique de projection (5), et formant un angle φ par rapport à un plan horizontal, autour de l'axe optique de projection (5) ;
dispositif dans lequel :
- la lentille de projection (23) de chaque module lumineux (2) présente un axe optique de lentille parallèle à l'axe optique de projection (5), et
- la surface réfléchissante (221) de chaque collecteur (22) est configurée pour que les rayons lumineux réfléchis soient sous forme d'un faisceau orienté suivant une direction principale de réflexion confondue avec l'axe optique de lentille (23), et
- les sources de lumière (21) sont disposées sur le support avec un premier décalage suivant l'axe optique de projection (5), et avec un deuxième décalage suivant une direction verticale Z, lorsque le dispositif est en position fonctionnelle, et
- au moins un des angles γ et φ est non nul, l'angle γ étant compris dans un premier secteur angulaire qui permet que la direction principale d'émission des sources de lumière (21) soit dirigée vers l'avant du véhicule (0) dans la position fonctionnelle, et l'angle φ étant dirigé dans un deuxième secteur angulaire qui permet que la direction principale d'émission des sources de lumière (21) soit dirigée vers l'intérieur du véhicule (0) dans la position fonctionnelle.

2. Dispositif selon la revendication précédente, dans lequel le premier secteur angulaire est compris entre 0° et 12°.

3. Dispositif selon l'une quelconque des revendications précédentes, dans lequel le deuxième secteur angulaire est compris entre 0° et 6°, et de préférence entre 0° et 3°.

4. Dispositif selon l'une quelconque des revendications précédentes, dans lequel, pour chaque module lumineux (2), la lentille de projection (23) présente une symétrie autour de son axe optique.

5. Dispositif selon l'une quelconque des revendications précédentes, dans lequel les sources de lumière (21) sont disposées sur le support tel que le premier décalage progresse de manière monotone suivant l'axe optique de projection (5), et tel que le deuxième décalage progresse de manière monotone suivant la direction verticale Z, lorsque le dispositif est en position fonctionnelle.

6. Dispositif selon la revendication précédente, dans lequel les sources de lumière (21) forment, dans le plan de support (4), un profil P rectiligne qui se dirige vers l'arrière du véhicule (0) quand ledit profil P se dirige vers l'extérieur du véhicule (0), dans la position fonctionnelle.

7. Dispositif selon la revendication précédente, dans lequel le profil P forme une première projection selon la direction verticale Z, dans le plan formé par l'axe optique de projection (5) et l'axe d'inclinaison Y, première projection qui présente une première inclinaison β par rapport à l'axe d'inclinaison Y, et dans lequel la première inclinaison β est inférieure à 50°, et de préférence inférieure à 35°.

8. Dispositif selon l'une quelconque des deux revendications précédentes, dans lequel le profil P forme une deuxième projection selon l'axe optique de projection (5), dans le plan formé par la direction verticale Z et l'axe d'inclinaison Y, deuxième projection qui présente une deuxième inclinaison α par rapport à l'axe d'inclinaison Y, et dans lequel la deuxième inclinaison α est inférieure à 10°, et de préférence inférieure à 5°.

9. Dispositif selon l'une quelconque des revendications précédentes, dans lequel, pour chaque module lumineux (2), la surface réfléchissante (221) comporte un bord arrière (222) au voisinage duquel un foyer de la lentille de projection (23) est situé, de préférence à moins de 10 mm de distance.

10. Dispositif selon l'une quelconque des revendications précédentes, configuré pour produire un faisceau lumineux de sortie de type feu de croisement.

11. Véhicule (0) équipé de deux dispositifs selon l'une quelconque des revendications précédentes, les deux dispositifs étant chacun situé d'un côté du véhicule (0) et de sorte à projeter un faisceau lumineux vers l'avant du véhicule (0).

12. Véhicule (0) selon la revendication précédente, dans lequel les deux dispositifs sont symétriques relativement à un plan verticale médian du véhicule (0) parallèle à l'axe optique de projection (5).

## Patentansprüche

1. Leuchtvorrichtung eines Kraftfahrzeugs (0), die konfiguriert ist, um einen Lichtausgabestrahl entlang einer optischen Projektionsachse (5) zu projizieren, die dazu bestimmt ist, in einer Funktionsstellung der Vorrichtung im Fahrzeug (0), in der die Vorrichtung eine Seite einer Fahrzeugfront des Fahrzeugs (0) zur Projektion nach vorne des Fahrzeugs (0) ausstattet, horizontal von hinten nach vorne des Fahrzeugs (0) gerichtet zu sein, umfassend:
- eine Vielzahl von nebeneinander angeordneten Lichtmodulen (2), die jeweils mindestens eine Lichtquelle (21), einen Kollektor (22) mit einer reflektierenden Oberfläche (221) und eine Projektionslinse (23) aufweisen, wobei die reflektierende Oberfläche (221) konfiguriert ist, um von der Lichtquelle (21) ausgehende Lichtstrahlen zur Projektionslinse (23) zu reflektieren, und
- einen Träger, auf dem alle Lichtquellen in einer Trägerebene (4) angeordnet sind, wobei die Trägerebene (4) einen Winkel γ gegenüber einer horizontalen Ebene um eine horizontale und senkrecht zur optischen Projektionsachse (5) verlaufende Neigungsachse Y bildet, und einen Winkel φ gegenüber einer horizontalen Ebene um die optische Projektionsachse (5) bildet;
Vorrichtung, in der:
- die Projektionslinse (23) jedes Lichtmoduls (2) eine optische Linsenachse aufweist, die parallel zur optischen Projektionsachse (5) ist, und
- die reflektierende Oberfläche (221) jedes Kollektors (22) so konfiguriert ist, dass die reflektierten Lichtstrahlen in Form eines Strahls ausgerichtet sind, der einer Hauptreflexionsrichtung folgt, die mit der optischen Linsenachse (23) zusammenfällt, und
- die Lichtquellen (21) auf dem Träger mit einem ersten Versatz entlang der optischen Projektionsachse (5) und mit einem zweiten Versatz entlang einer vertikalen Richtung Z angeordnet sind, wenn sich die Vorrichtung in der Funktionsstellung befindet, und
- mindestens einer der Winkel φ und γ ungleich null ist, wobei der Winkel γ in einem ersten Winkelbereich liegt, der es ermöglicht, dass die Hauptemissionsrichtung der Lichtquellen (21) in der Funktionsstellung nach vorne des Fahrzeugs (0) gerichtet ist, und der Winkel φ in einem zweiten Winkelbereich gerichtet ist, der es ermöglicht, dass die Hauptemissionsrichtung der Lichtquellen (21) in der Funktionsstellung nach innen des Fahrzeugs (0) gerichtet ist.

2. Vorrichtung nach dem vorhergehenden Anspruch, bei der der erste Winkelbereich zwischen 0° und 12° liegt.

3. Vorrichtung nach einem der vorhergehenden Ansprüche, bei der der zweite Winkelbereich zwischen 0° und 6°, und vorzugsweise zwischen 0° und 3° liegt.

4. Vorrichtung nach einem der vorhergehenden Ansprüche, bei der für jedes Lichtmodul (2) die Projektionslinse (23) eine Symmetrie um ihre optische Achse aufweist.

5. Vorrichtung nach einem der vorhergehenden Ansprüche, bei der die Lichtquellen (21) auf dem Träger so angeordnet sind, dass der erste Versatz entlang der optischen Projektionsachse (5) monoton zunimmt, und dass der zweite Versatz entlang der vertikalen Richtung Z monoton zunimmt, wenn sich die Vorrichtung in der Funktionsstellung befindet.

6. Vorrichtung nach dem vorhergehenden Anspruch, bei der die Lichtquellen (21) in der Trägerebene (4) ein geradliniges Profil P bilden, das sich in der Funktionsstellung nach hinten des Fahrzeugs (0) richtet, wenn sich das Profil P nach außen des Fahrzeugs (0) richtet.

7. Vorrichtung nach dem vorhergehenden Anspruch, bei der das Profil P eine erste Projektion entlang der vertikalen Richtung Z in der durch die optische Projektionsachse (5) und die Neigungsachse Y gebildeten Ebene bildet, wobei diese erste Projektion eine erste Neigung ß gegenüber der Neigungsachse Y aufweist, und bei der die erste Neigung ß kleiner als 50°, und vorzugsweise kleiner als 35° ist.

8. Vorrichtung nach einem der beiden vorhergehenden Ansprüche, bei der das Profil P eine zweite Projektion entlang der optischen Projektionsachse (5) in der durch die vertikale Richtung Z und die Neigungsachse Y gebildeten Ebene bildet, wobei diese zweite Projektion eine zweite Neigung a gegenüber der Neigungsachse Y aufweist, und bei der die zweite Neigung a kleiner als 10°, und vorzugsweise kleiner als 5° ist.

9. Vorrichtung nach einem der vorhergehenden Ansprüche, bei der für jedes Lichtmodul (2) die reflektierende Oberfläche (221) einen hinteren Rand (222) aufweist, in dessen Nähe ein Brennpunkt der Projektionslinse (23) liegt, vorzugsweise in einem Abstand von weniger als 10 mm.

10. Vorrichtung nach einem der vorhergehenden Ansprüche, die konfiguriert ist, um einen Lichtausgabestrahl vom Typ Abblendlicht zu erzeugen.

11. Fahrzeug (0), das mit zwei Vorrichtungen nach einem der vorhergehenden Ansprüche ausgestattet ist, wobei die beiden Vorrichtungen jeweils auf einer Seite des Fahrzeugs (0) angeordnet sind und so ausgerichtet sind, dass sie einen Lichtstrahl nach vorne des Fahrzeugs (0) projizieren.

12. Fahrzeug (0) nach dem vorhergehenden Anspruch, bei dem die beiden Vorrichtungen symmetrisch zu einer vertikalen Mittelebene des Fahrzeugs (0) sind, die parallel zur optischen Projektionsachse (5) verläuft.

## Claims

1. A luminous device of a motor vehicle (0), the luminous device being configured to project an output light beam along an optical axis of projection (5) intended to be directed horizontally from the rear to the front of the vehicle (0) in a functional position of the device in the vehicle (0), in which functional position the device equips one side of a front face of the vehicle (0) with a view to projecting toward in front of the vehicle (0), this luminous device comprising:
- a plurality of juxtaposed luminous modules (2) each comprising at least one light source (21), one collector (22) equipped with a reflective surface (221) and one projecting lens (23), the reflective surface (221) being configured to reflect, toward the projecting lens (23), light rays generated by the light source (21), and
- a carrier on which all of the light sources are arranged in a carrier plane (4), the carrier plane (4) making an angle γ to a horizontal plane, about a tilt axis Y that is horizontal and perpendicular to the optical axis of projection (5), and making an angle φ to a horizontal plane, about the optical axis of projection (5);
in which device:
- the projecting lens (23) of each luminous module (2) has a lens optical axis parallel to the optical axis of projection (5), and
- the reflective surface (221) of each collector (22) is configured so that the reflected light rays form a beam oriented in a main direction of reflection coincident with the lens optical axis (23), and
- the light sources (21) are arranged on the carrier with a first offset along the optical axis of projection (5), and with a second offset in a vertical direction Z, when the device is in the functional position, and
- at least one of the angles γ and φ is non-zero, the angle γ being contained in a first angular sector that allows the main direction of emission of the light sources (21) to be directed toward in front of the vehicle (0) in the functional position, and the angle φ is directed in a second angular sector that allows the main direction of emission of the light sources (21) to be directed toward the interior of the vehicle (0) in the functional position.

2. The device as claimed in the preceding claim, wherein the first angular sector is between 0° and 12°.

3. The device as claimed in either of the preceding claims, wherein the second angular sector is between 0° and 6°, and preferably between 0° and 3°.

4. The device as claimed in any of the preceding claims, wherein, for each luminous module (2), the projecting lens (23) is symmetric about its optical axis.

5. The device as claimed in any of the preceding claims, wherein the light sources (21) are arranged on the carrier such that the first offset progresses monotonically along the optical axis of projection (5), and such that the second offset progresses monotonically in the vertical direction Z, when the device is in the functional position.

6. The device as claimed in the preceding claim, wherein the light sources (21) form, in the carrier plane (4), a rectilinear profile P that is directed toward the rear of the vehicle (0) when said profile P is directed toward the exterior of the vehicle (0), in the functional position.

7. The device as claimed in the preceding claim, wherein the profile P forms a first projection in the vertical direction Z, in the plane formed by the optical axis of projection (5) and the tilt axis Y, which first projection has a first tilt β with respect to the tilt axis Y, and wherein the first tilt β is less than 50°, and preferably less than 35°.

8. The device as claimed in either of the two preceding claims, wherein the profile P forms a second projection along the optical axis of projection (5), in the plane formed by the vertical direction Z and the tilt axis Y, which second projection has a second tilt α with respect to the tilt axis Y, and wherein the second tilt α is less than 10° and preferably less than 5°.

9. The device as claimed in any of the preceding claims, wherein, for each luminous module (2), the reflective surface (221) comprises a rear edge (222) in the vicinity of which a focal point of the projecting lens (23) is located, preferably at a distance of less than 10 mm.

10. The device as claimed in any of the preceding claims, configured to produce an output light beam of low-beam type.

11. A vehicle (0) equipped with two devices as claimed in any of the preceding claims, the two devices each being located on one side of the vehicle (0) and so as to project a light beam toward in front of the vehicle (0).

12. The vehicle (0) as claimed in the preceding claim, wherein the two devices are symmetric relative to a median vertical plane of the vehicle (0) parallel to the optical axis of projection (5).
